# DEMANDE DE BREVET EUROPEEN

(11) **EP 1 356 993 A1**
(43) Date de publication de la demande: **29.10.2003**
(21) Numéro de dépôt: 03291010.1
(22) Date de dépôt: 24.04.2003
(51) Int. Cl.: B60R 5/04

(54) **Tablette arrière de véhicule**

(30) Priorité: 26.04.2002 FR 0205314
(71) Demandeur: Faurecia Automotive Industrie, 92000 Nanterre (FR)
(72) Inventeur: Habert, Cédric, 08210 Mouzon (FR); Dubois, Thomas, 08200 Sedan (FR)
(74) Mandataire: Domenego, Bertrand

(57) **Abrégé**

Cet ensemble comprend un panneau rigide (10) et au moins un système (12) de prolongement longitudinal du panneau (10). Le système est fixé au panneau et comprenant une feuille souple (26) et un dispositif d'enroulement/déroulement (30) de la feuille souple disposé dans un boîtier (44) pour permettre à la feuille souple déroulée de prolonger longitudinalement le panneau. Le panneau comprend une paroi supérieure rigide (18) et une paroi inférieure rigide (20) délimitant entre elles et dans l'épaisseur du bord avant ou du bord arrière un logement (24) de réception du dispositif d'enroulement/déroulement, le panneau (10) formant ainsi par venue de matière au moins une partie (45) du boîtier (44) du dispositif d'enroulement/déroulement.

## Description

La présente invention concerne un ensemble arrière de masquage du chargement d'un véhicule automobile, du type comprenant :
- un panneau rigide s'étendant d'une part d'un bord arrière jusqu'à un bord avant le long d'une direction destinée à être longitudinale par rapport au véhicule, et d'autre part le long d'une direction destinée à être transversale par rapport au véhicule, et
- au moins un système de prolongement longitudinal du panneau, ledit système étant fixé au panneau et comprenant une feuille souple et un dispositif d'enroulement/déroulement de la feuille souple disposé dans un boîtier pour permettre à la feuille souple déroulée de prolonger longitudinalement le panneau.

L'invention s'applique par exemple aux véhicules automobiles munis de hayons.

Dans un ensemble arrière du type précité, le panneau comprend généralement une paroi unique rigide sous laquelle le système de prolongement complet est rapporté et fixé par l'intermédiaire de son boîtier.

La feuille souple est munie de moyens de fixation soit au dossier des sièges arrière des véhicules si elle est destinée à prolonger le panneau vers l'avant, soit au hayon si elle est destinée à prolonger le panneau vers l'arrière.

Si un tel ensemble arrière permet de masquer de manière satisfaisante le chargement arrière d'un véhicule automobile, on constate qu'il est de masse et de coût élevés.

Un but de l'invention est donc de résoudre ce problème en fournissant un ensemble du type précité qui soit de coût et de masse réduits.

A cet effet, l'invention a pour objet un ensemble du type précité, caractérisé en ce que le panneau comprend une paroi supérieure rigide et une paroi inférieure rigide délimitant entre elles et dans l'épaisseur du bord avant ou du bord arrière un logement de réception du dispositif d'enroulement/déroulement, le panneau formant ainsi par venue de matière au moins une partie du boîtier du dispositif d'enroulement/déroulement.

Selon des modes particuliers de réalisation, l'ensemble peut comprendre l'une ou plusieurs des caractéristiques suivantes, prise(s) isolément ou selon toutes les combinaisons techniquement possibles :
- le boîtier comprend en outre une pièce de fermeture du logement fixée au panneau ;
- la pièce de fermeture est fixée au panneau par encliquetage ;
- une fente de passage de la feuille souple est ménagée dans la pièce de fermeture ;
- la paroi supérieure et la paroi inférieure se rapprochent l'une de l'autre en s'éloignant longitudinalement du panneau pour délimiter entre elles une fente de passage de la feuille souple ;
- le panneau forme par venue de matière l'ensemble du boîtier ;
- la paroi supérieure et la paroi inférieure sont réalisées en matière plastique.

L'invention a en outre pour objet un véhicule automobile comprenant un coffre arrière et un ensemble arrière de masquage du chargement contenu dans le coffre, caractérisé en ce que l'ensemble arrière de masquage est un ensemble selon les caractéristiques décrites ci-dessus.

L'invention sera mieux comprise à la lecture de la description qui va suivre, donnée uniquement à titre d'exemple, et faite en se référant aux dessins annexés, sur lesquels :
- la figure 1 est une vue schématique, partielle et en perspective de l'extrémité arrière d'un véhicule automobile selon l'invention,
- la figure 2 est une vue schématique en perspective éclatée de l'ensemble arrière de masquage du chargement du véhicule de la figure 1,
- la figure 3 est une vue schématique en coupe prise suivant le plan III-III de la figure 2 ; et
- la figure 4 est une vue agrandie partielle analogue à la figure 3 et illustrant un deuxième mode de réalisation de l'invention.

Dans tout ce qui suit, les orientations utilisées sont les orientations habituelles d'un véhicule automobile. Ainsi, les termes « avant », « arrière », « droite » et « gauche » s'entendent par rapport à la position d'un conducteur du véhicule automobile et à son sens de marche.

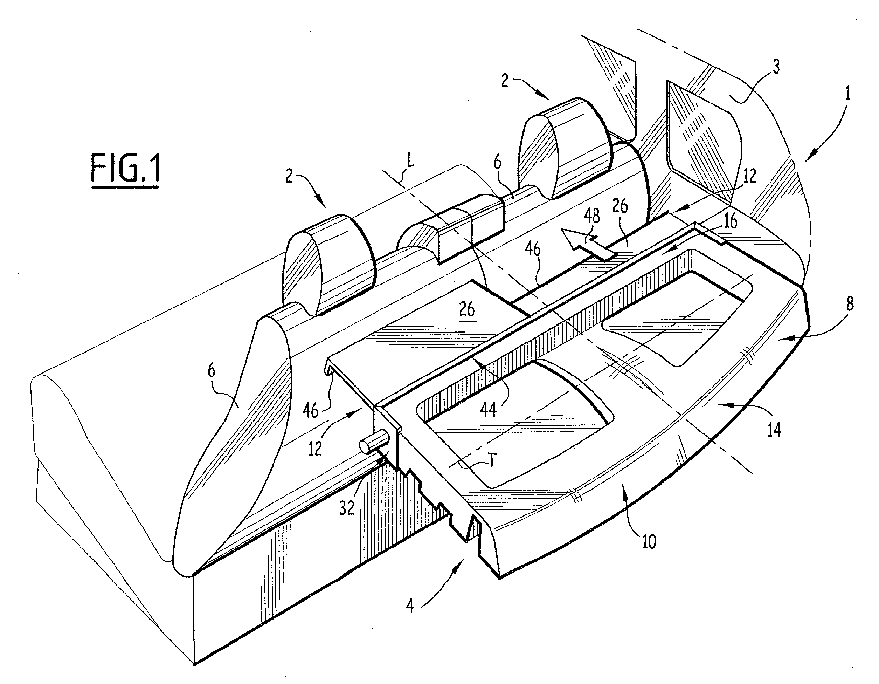

On a représenté sur la figure 1 l'extrémité arrière 1 d'un véhicule automobile. On y distingue les sièges arrière 2, une partie du flanc latéral droit 3 de la carrosserie ainsi que le coffre 4 du véhicule.

Le coffre 4 est un espace de chargement délimité notamment par les sièges arrière 2, les flancs latéraux 3 de la carrosserie et par le hayon non-représenté du véhicule.

L'extrémité arrière 1 comprend, à l'arrière des dossiers 6 des sièges 2, un ensemble arrière 8 de masquage d'un chargement disposé dans le coffre 4. On notera qu'un tel chargement n'a pas été représenté sur la figure 1.

Cet ensemble 8 comprend un panneau rigide 10 et deux systèmes 12 de prolongement longitudinal vers l'avant du panneau 10.

Le panneau 10, parfois dénommé tablette, s'étend horizontalement le long d'une direction L parallèle à la direction longitudinale du véhicule, entre un bord arrière 14 et un bord avant 16. Le panneau 10 s'étend en outre horizontalement le long d'une direction transversale T sensiblement sur toute la largeur du coffre 4.

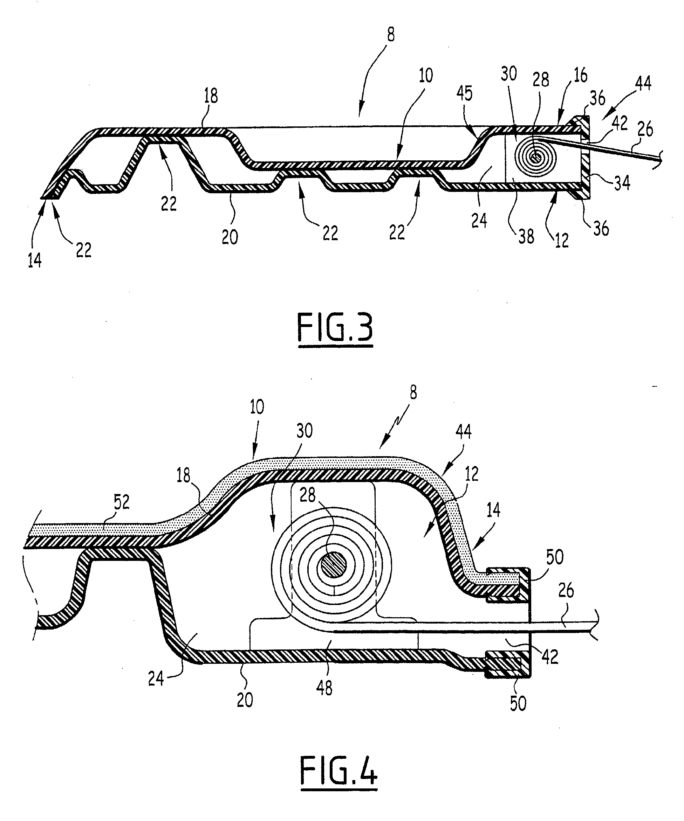

Le panneau 10 comprend comme on le voit sur la figure 3 une paroi supérieure 18 et une paroi inférieure 20 réalisées par exemple sous forme de coques en matière plastique thermoformée.

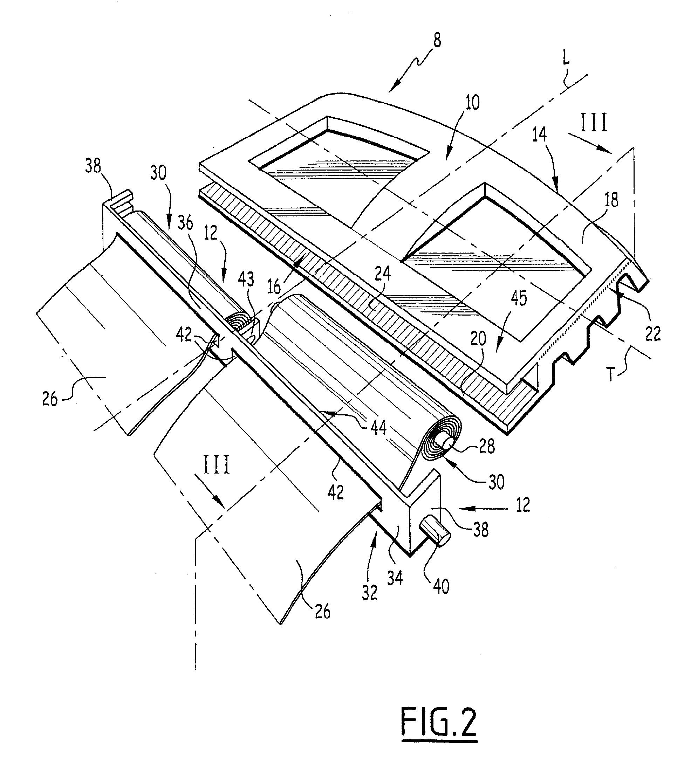

Les parois 18 et 20 sont soudées l'une à l'autre le long de zones 22 dont l'une s'étend le long du bord arrière 14 du panneau 10. Les bords latéraux des parois 18 et 20 sont également soudés le long des zones 22 comme on le voit sur la figure 2. En variante, la fixation des parois 18 et 20 peut être assurée par collage ou les parois 18 et 20 peuvent être formées en une seule pièce de matière plastique par soufflage.

Les parois 18 et 20 sont espacées l'une de l'autre à l'avant 16 du panneau 10 et délimitent entre elles un logement 24 dans l'épaisseur du bord avant 16. Le logement 24 s'étend sensiblement sur toute la largeur du panneau 10 et débouche à l'extérieur de celui-ci vers l'avant.

Les deux systèmes de prolongement 12 sont disposés l'un à côté de l'autre à l'avant du panneau 10.

Leurs structures étant analogues, seule celle du système 12 gauche sera décrite en se référant aux figures 2 et 3.

Le système 12 comprend une feuille souple 26 enroulée sur le tambour 28 d'un dispositif d'enroulement/déroulement 30, parfois dénommé enrouleur. La feuille 26 est par exemple réalisée en textile. Le tambour 28 est monté à rotation sur une pièce rapportée 32 commune aux deux systèmes 12 de prolongement.

La pièce 32, réalisée par exemple en matière plastique, comprend une paroi avant 34 (fig. 3) munie à ses bords supérieur et inférieur de reliefs 36 d'encliquetage sur les parois supérieure 18 et inférieure 20 du panneau 10. La paroi avant 34 est prolongée vers l'arrière à ses extrémités latérales par deux ailes 38 munies de pivots 40 d'articulation aux flancs latéraux 3 de la carrosserie. Les reliefs 36 s'étendent également sur les bords supérieur et inférieur des ailes 38.

Deux fentes 42 sont ménagées l'une à côté de l'autre dans la paroi avant 34 pour permettre chacune le passage d'une feuille 26.

Les dispositifs d'enroulement/déroulement 30 sont montés sur la pièce 32 par l'intermédiaire des ailes 38 et d'un flasque central 43 (figure 2). Les dispositifs 30 sont disposés dans le logement 24 ménagé dans l'épaisseur du bord avant 16 du panneau 10.

La pièce 32 est fixée grâce aux reliefs 36 au bord avant 16 du panneau 10 en venant fermer le logement 24. La pièce 32 constitue alors, avec les extrémités avant des parois supérieure 18 et inférieure 20, un boîtier 44 commun contenant les deux systèmes de prolongement 12. Une partie 45 de ce boîtier 44 est donc venue de matière avec le panneau 10.

Pour utiliser les systèmes 12 une fois le panneau 10 disposé à l'extrémité arrière 1 du véhicule, on vient tirer sur les extrémités avant 46 des feuilles 26 pour les dérouler des dispositifs 30 et les extraire du boîtier 44, comme illustré par la flèche 48 sur la figure 1 pour la feuille droite.

Cette traction s'effectue contre l'action de moyens élastiques de rappel non-représentés des dispositifs d'enroulement/déroulement 30, par exemple des ressorts spirales.

Les extrémités avant 46 des feuilles 26 sont munies de moyens de fixation aux dossiers 6 des sièges 2, par exemple des éléments de boutons-pression ou des bandes autoagrippantes du type VELCRO (marque déposée).

Ainsi, l'ensemble de masquage 8 permet, une fois les deux feuilles 26 fixées aux dossiers 6 des sièges 2, de masquer de manière satisfaisante le chargement du coffre 4. En particulier, la présence des dispositifs d'enroulement/déroulement 30 des feuilles 26 permet à celles-ci d'être tendues pour toutes les positions des dossiers 6.

L'utilisation des extrémités avant des parois supérieure 18 et inférieure 20 du panneau 10 pour former une partie 45 du boîtier 44 des systèmes de prolongement 12 permet de ne pas réaliser séparément les systèmes 12 sous forme de systèmes complets comprenant des boîtiers structurants utilisés pour leur fixation sur le panneau 10. Ainsi, l'ensemble 8, dont la pièce 32 n'a pas de rôle structurant, et de coût et de masse réduits.

Dans des variantes, la pièce rapportée 32 est fixée au panneau 10 par d'autres moyens de fixation que des reliefs 36 d'encliquetage. Il peut s'agir, par exemple, de vis.

Dans une variante, la paroi supérieure 18 du panneau 10 peut être recouverte d'un revêtement d'habillage, par exemple un revêtement textile.

C'est le cas dans le deuxième mode de réalisation illustré par la figure 4.

Cette figure illustre le bord arrière 14 d'un panneau 10 où les systèmes 12 de prolongement longitudinal sont prévus à l'arrière plutôt qu'à l'avant comme dans le mode de réalisation des figures 1 à 3.

Ces systèmes 12 sont reçus dans un logement 24 qui est ménagé, dans ce mode de réalisation, dans l'épaisseur du bord arrière 14 du panneau 10.

Les tambours 28 des systèmes 12 sont montés à rotation sur des flasques 48 disposés dans le logement 24. Les extrémités arrière des parois 18 et 20 se rapprochent l'une de l'autre lorsqu'on s'éloigne longitudinalement vers l'arrière du panneau pour venir délimiter entre elles une fente unique 42 de passage des feuilles 26.

Le panneau 10 forme alors l'ensemble du boîtier 44 par venue de matière.

Les parois 18 et 20 sont munies chacune au droit de la fente 42 d'une baguette d'aspect 50 enserrant leur extrémité arrière.

La baguette 50 équipant la feuille supérieure 18 enserre également le revêtement d'aspect 52 recouvrant la feuille supérieure 18.

Dans ce mode de réalisation, les extrémités arrière des feuilles 26 sont destinées à être fixées au hayon du véhicule automobile.

On notera que pour réaliser l'ensemble 8, les dispositifs d'enroulement/déroulement 30 peuvent être fixés, par exemple via les flasques 48, à la paroi inférieure 20 avant qu'elle soit fixée à la paroi supérieure 18.

Dans un troisième mode de réalisation non-représenté, les bords arrière 14 et avant 16 du panneau 10 sont munis de systèmes 12 de prolongement longitudinal.

On notera que le nombre de systèmes 12 prévus à un même bord peut être égal à un ou strictement supérieur à deux.

De manière générale, les principes ci-dessus peuvent s'appliquer à des véhicules munis d'ouvrants arrière autres que des hayons.

## Revendications

1. Ensemble arrière (8) de masquage du chargement d'un véhicule automobile, du type comprenant :
- un panneau rigide (10) s'étendant d'une part d'un bord arrière (14) jusqu'à un bord avant (16) le long d'une direction (L) destinée à être longitudinale par rapport au véhicule, et d'autre part le long d'une direction (T) destinée à être transversale par rapport au véhicule, et
- au moins un système (12) de prolongement longitudinal du panneau (10), ledit système étant fixé au panneau et comprenant une feuille souple (26) et un dispositif d'enroulement/déroulement (30) de la feuille souple disposé dans un boîtier (44) pour permettre à la feuille souple déroulée de prolonger longitudinalement le panneau,
**caractérisé en ce que** le panneau comprend une paroi supérieure rigide (18) et une paroi inférieure rigide (20) délimitant entre elles et dans l'épaisseur du bord avant ou du bord arrière un logement (24) de réception du dispositif d'enroulement/déroulement, le panneau (10) formant ainsi par venue de matière au moins une partie (45) du boîtier (44) du dispositif d'enroulement/déroulement.

2. Ensemble selon la revendication 1, **caractérisé en ce que** le boîtier (44) comprend en outre une pièce (32) de fermeture du logement (24) fixée au panneau (10).

3. Ensemble selon la revendication 1 ou 2, **caractérisé en ce que** la pièce de fermeture (32) est fixée au panneau par encliquetage.

4. Ensemble selon la revendication 2 ou 3, **caractérisé en ce qu'**une fente (42) de passage de la feuille souple (26) est ménagée dans la pièce de fermeture (32).

5. Ensemble selon la revendication 1, **caractérisé en ce que** la paroi supérieure (18) et la paroi inférieure (20) se rapprochent l'une de l'autre en s'éloignant longitudinalement du panneau pour délimiter entre elles une fente (42) de passage de la feuille souple (26).

6. Ensemble selon la revendication 1 ou 5, **caractérisé en ce que** le panneau (10) forme par venue de matière l'ensemble du boîtier (44).

7. Ensemble selon l'une des revendications précédentes, **caractérisé en ce que** la paroi supérieure (18) et la paroi inférieure (20) sont réalisées en matière plastique.

8. Véhicule automobile comprenant un coffre arrière (4) et un ensemble arrière (8) de masquage du chargement contenu dans le coffre, **caractérisé en ce que** l'ensemble arrière de masquage (8) est un ensemble selon l'une des revendications précédentes.
